Europäisches Patentamt

European Patent Office

Office européen des brevets

(11) Publication number: **0 137 049**
**A1**

## (12) EUROPEAN PATENT APPLICATION
published in accordance with Art. 158(3) EPC

(21) Application number: **84900884.2**

(22) Date of filing: **22.02.84**

Data of the international application taken as a basis:

(86) International application number:
**PCT/JP84/00064**

(87) International publication number:
**WO84/03386 (30.08.84 84/21)**

(51) Int. Cl.⁴: **G 11 B 5/12**
**G 11 B 5/20**

(30) Priority: **25.02.83 JP 31370/83**

(43) Date of publication of application:
**17.04.85 Bulletin 85/16**

(84) Designated Contracting States:
**DE FR GB NL**

(71) Applicant: **SONY CORPORATION**
**7-35 Kitashinagawa 6-Chome Shinagawa-ku**
**Tokyo 141(JP)**

(72) Inventor: **HAYAKAWA, Kiyonori Sony Corporation**
**7-35, Kitashinagawa 6-chome**
**Shinagawa-ku Tokyo 141(JP)**

(74) Representative: **Thomas, Christopher Hugo et al,**
**D Young & Co 10 Staple Inn**
**London WC1V 7RD(GB)**

(54) PERPENDICULAR MAGNETIC RECORDING HEAD.

(57) A perpendicular magnetic recording head comprises a main magnetic pole (2) constituted by a thin layer of a soft magnetic material and a pair of guard blocks (4) (4') integrally bonded to the main magnetic pole (2) so as to sandwich it from both sides thereof. The guard blocks (4) (4') are each constituted by a composite of a non-magnetic material portion (5) or (5') extending from the surface of the head which comes into contact with a magnetic recording medium, as far as a predetermined position, and a magnetic material portion (6) or (6'). The joint between each non-magnetic material portion (5) or (5') and the corresponding magnetic material portion (6) or (6') is provided with a groove (9) or (9') constituting an auxiliary magnetic pole portion (7) or (7') which is connected magnetically to the main magnetic pole (2) so as to act as an auxiliary magnetic pole across the width in the direction of travel of the magnetic recording medium. Each auxiliary magnetic pole portion (7) or (7') formed by the groove (9) or (9') has a smaller width in the direction of the track than that of the guard block (4) or (4'). A winding C is provided on the main magnetic pole (2) within the grooves (9) (9'), and the impedance of the winding C is reduced to increase the magnetic recording and reproduction efficiency.

FIG. 9A

./...

FIG. 9B

FIG. 9C

- 1.-

# DESCRIPTION

## TITLE OF THE INVENTION

MAGNETIC TRANSDUCER HEAD FOR PERPENDICULAR MODE
RECORDING

## TECHNICAL FIELD

The present invention relates to a magnetic
transducer head for use in a perpendicular mode recording.

## BACKGROUND ART

In carrying out the high density magnetic recording
(short wavelength recording), it is known in the prior art
that the recording according to the magnetization in the
thickness direction of a magnetic tape, namely, so-called
perpendicular or vertical mode recording is more advantageous
than the recording according to the magnetization along the
relative moving direction of the magnetic tape to a magnetic
transducer head or so-called longitudinal mode recording.
The reason for this is that according to the longitudinal
mode recording when the wavelength of the recording signal
becomes shorter the self-demagnetizing field becomes larger,
while according to the perpendicular or vertical mode recording the self-demagnetizing field within the magnetic layer
becomes smaller.

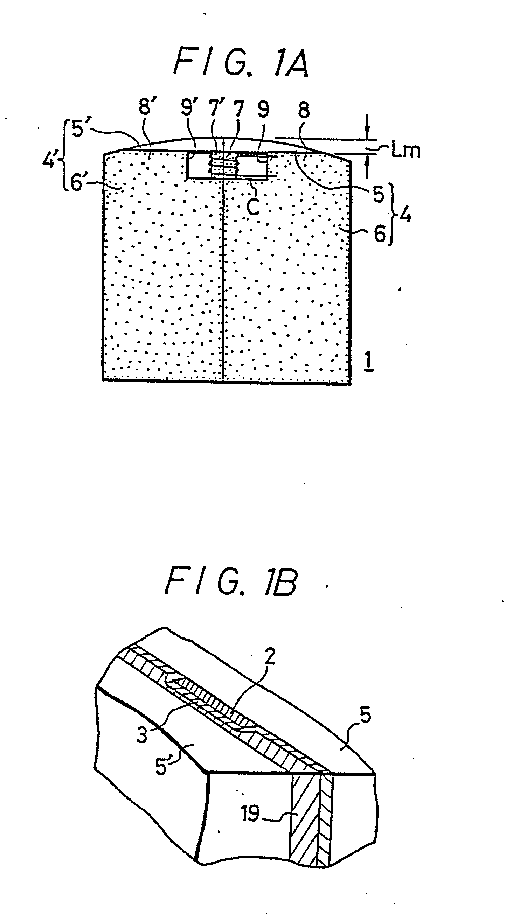

Fig. 1 shows an overall of an example of a magnetic
transducer head for use in perpendicular mode recording which
was perviously proposed by Japanese patent application No.
34243/1982 (publicated document of Japanese patent application unexamined No. 153216/1983) filed by the present applicant.

As shown in Fig. 1B, the magnetic transducer head 1 in this example is formed in such a manner that a main magnetic pole 2 made of a thin film of soft magnetic material is covered by a protection film 3 on its one side surface sandwiched by guard blocks 4 and 4' at its both sides and is integrated therewith. The guard blocks 4 and 4' are respectively formed of non-magnetic portions 5 and 5' which are extended from the contact surface of the main magnetic pole with the magnetic record medium to a predetermined position and magnetic material portions 6 and 6' bonded to the back of the non-magnetic material portions. On the magnetic material portions 6 and 6' are formed auxiliary magnetic pole portions 7 and 7' around which a coil C is wound, bonded to the main magnetic pole 2. Grooves 9 and 9' are provided which divide return path portions 8 and 8' for the magnetic flux $\phi$ generated from the auxiliary magnetic pole portions 7, 7' and the main magnetic pole 2. Within the grooves 9 and 9', the coil C is wound around the main magnetic pole 2 through the auxiliary magnetic pole portions 7 and 7'. In this case, Lm represents the length of the tip end portion of the main magnetic pole 2.

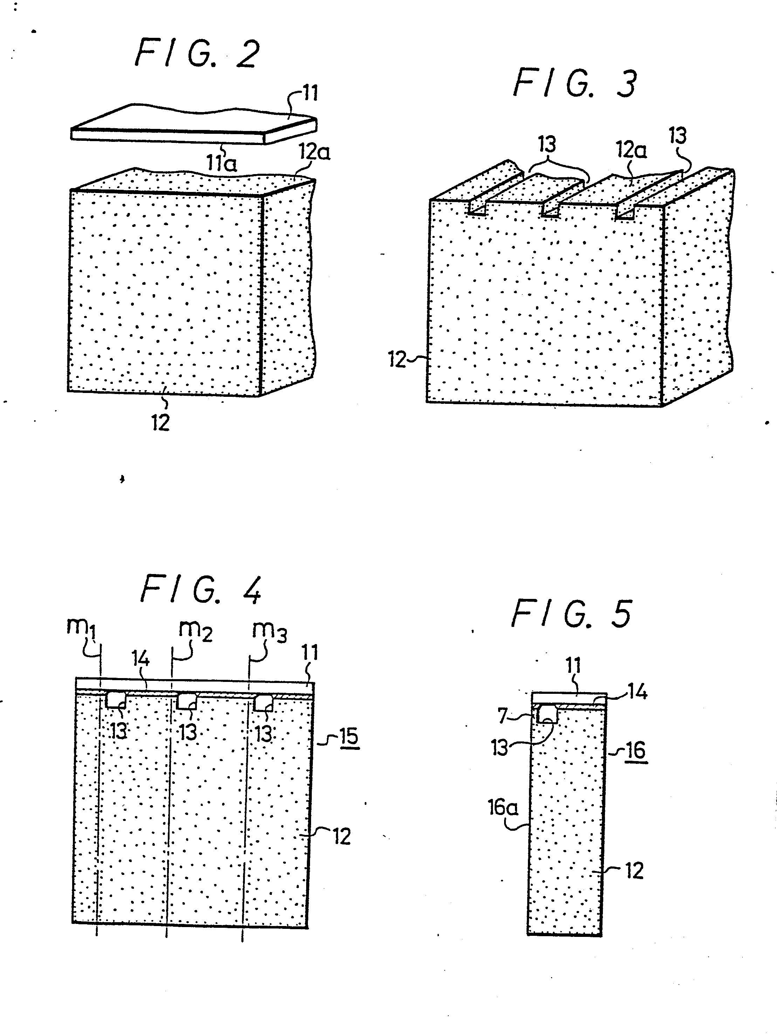

This magnetic transducer head for perpendicular mode recording is produced via various manufacturing processes as shown in Figs. 2 to 7.

First, a non-magnetic plate shape block 11 and a magnetic material block 12 as shown in Fig. 2 are respectively prepared. The non-magnetic plate shape block 11 can be made of non-magnetic ferrite (Zn ferrite), forsterite, fotoceram, crystallized glass, barium titanate, calcium titanate, ceramics of $Al_2O_3$ - TiC system and so on. On the other hand, the magnetic material block 12 can be made of Mn - Zn system ferrite and so on. These non-magnetic plate shape block 11 and magnetic material block 12 are desired to have substantially equal thermal expansion coefficient. For this reason, in this example, it is desired that the non-magnetic plate shape block 11 and the magnetic material block 12 are made of non-magnetic ferrite and magnetic ferrite, respectively. Each surface of the non-magnetic plate shape block 11 and the magnetic material block 12 is mirror-polished. Then, as shown in Fig. 3, grooves 13 are formed on a mirror-polished surface 12a of the magnetic material block 12 with a predetermined spacing therebetween. Under this state, a mirror-polished surface 11a of the non-magnetic plate shape block 11 is faced and then bonded to the mirror-polished surface 12a of the magnetic material block 12 as shown in Fig. 4. Although the above bonding can be carried out by melt bonding by glass or bonding agent 14 such as epoxy adhesive agent or inorganic adhesive agent such as water glass and so on, the melt bonding by glass is desired. In this case, since the melt bonding by glass is sometimes carried out again in the later process, glass having so high melting point as not to be melted by the second melt bonding is employed. Next, a bonded member 15 formed of the non-magnetic plate shape block 11 and the magnetic material block 12 is cut along the surface shown by one-dot chain lines

- 4 -

$m_1$, $m_2$, $m_3$ ... across the non-magnetic plate shape block
11 and the magnetic material block 12 to form a predetermined
number of complex plate shape members 16 of a predetermined
thickness as shown in Fig. 5 which then become one guard
block 4. Then, one major surface 16a of the complex plate
shape member 16 extending over the non-magnetic plate shape
block portion 11 and the magnetic material block portion 12
is mirror-polished. In this mirror-polishing, in order to
raise record/reproduce efficiency, the mirror-polishing is
performed in such a manner that the thickness of the auxiliary
magnetic pole 7 near the top of the main magnetic pole 2 is
formed as a predetermined one and the edge portion of the
groove 13 which will become the separate groove portion 9
is formed as a predetermined shape.

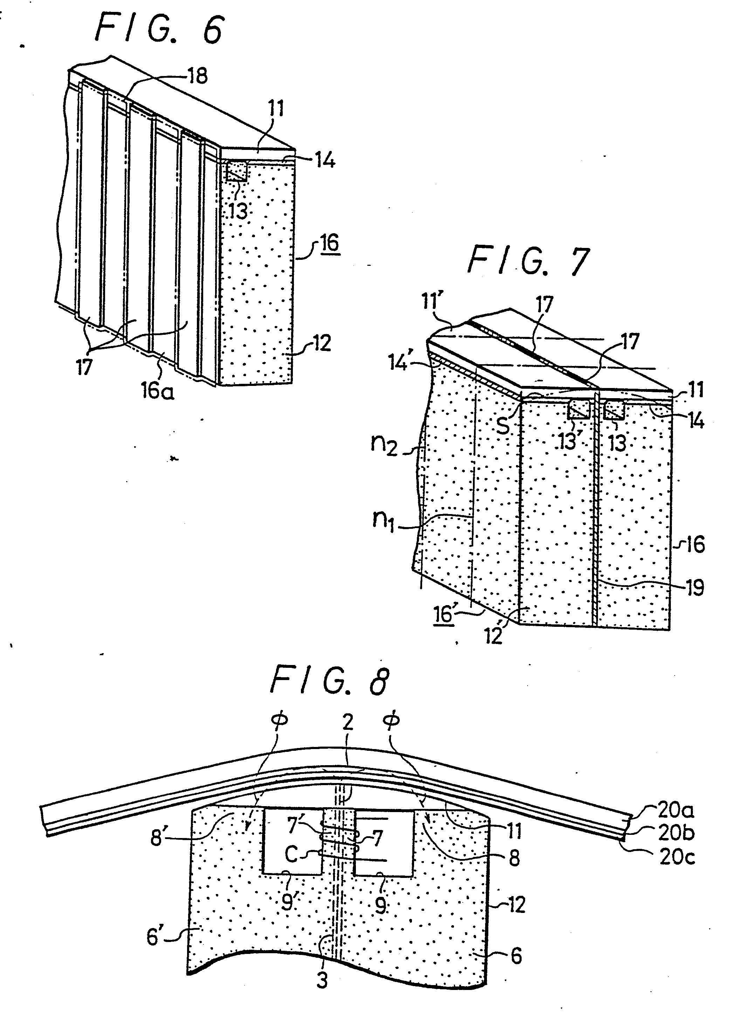

On the mirror-polished surface 16a of the complex
plate shape member 16 is deposited a magnetic thin film 17
forming the main magnetic pole 2 and having a thickness of,
for example, 0.1 to 3 μm made of permalloy, sendust alloy,
magnetic amorphous alloy and so on by sputtering, vacuum
deposition, ion plating or the like as shown in Fig. 6.
Then, the magnetic thin film is subjected to the photo-lithography technique such that the main magnetic poles 2 may be
located with a necessary track width and spacing. Then a
protection film 18 made of such as $SiO_2$, $Si_3N_4$, $Al_2O_3$ and
so on which will form the protection film 3 is deposited on
the magnetic thin film by sputtering, vacuum deposition, ion
plating and so on. Thereafter, as shown in Fig. 7, a complex

- 5 -

plate shape member 16', which will become the other guard block 4', manufactured according to the same method as in the afore-described complex plate shape member 16 is bonded to the side of the protection film 18. While it is desired that glass is used as an adhesive agent 19 from the viewpoint of improving reliability, inorganic adhesive agent such as water glass and so on or organic adhesive agent such as epoxy resin and so on can be used.

In this case, it is possible that a groove corresponding to the magnetic thin film 17 which will become the main magnetic pole 2 is formed in advance on the bonded surface of the other complex plate shape member 16' by, for example, etching and then an adhensive agent is filled into the above groove to bond both of the complex plate shape members 16 and 16' to each other.

After such bonding, as shown by one-dot chain lines $n_1$, $n_2$, ···, the bonded member thus made is cut with respect to each magnetic thin film 17 of band shape, bonded to a head mounting base (not shown) and the top surface, namely, the surface side of the non-magnetic plate shape block 11 is polished in which a contact surface S with the magnetic record medium is formed. Thus, the main magnetic pole 2 formed of the magnetic thin film 17 is provided to face the contact surface S with the magnetic record medium, the non-magnetic members 5 and 5' are placed at both sides of the top portion of the main magnetic pole 2, and the magnetic members 6 and 6' are placed therebehind. Then, the coil C is wound within

- 6 -

the grooves 9 and 9' which are formed on the magnetic members 6 and 6' to divide the return path portions 8 and 8' of the magnetic flux from the auxiliary magnetic poles 7, 7' and the main magnetic pole 2, thus forming the magnetic transducer head 1 according to this example.

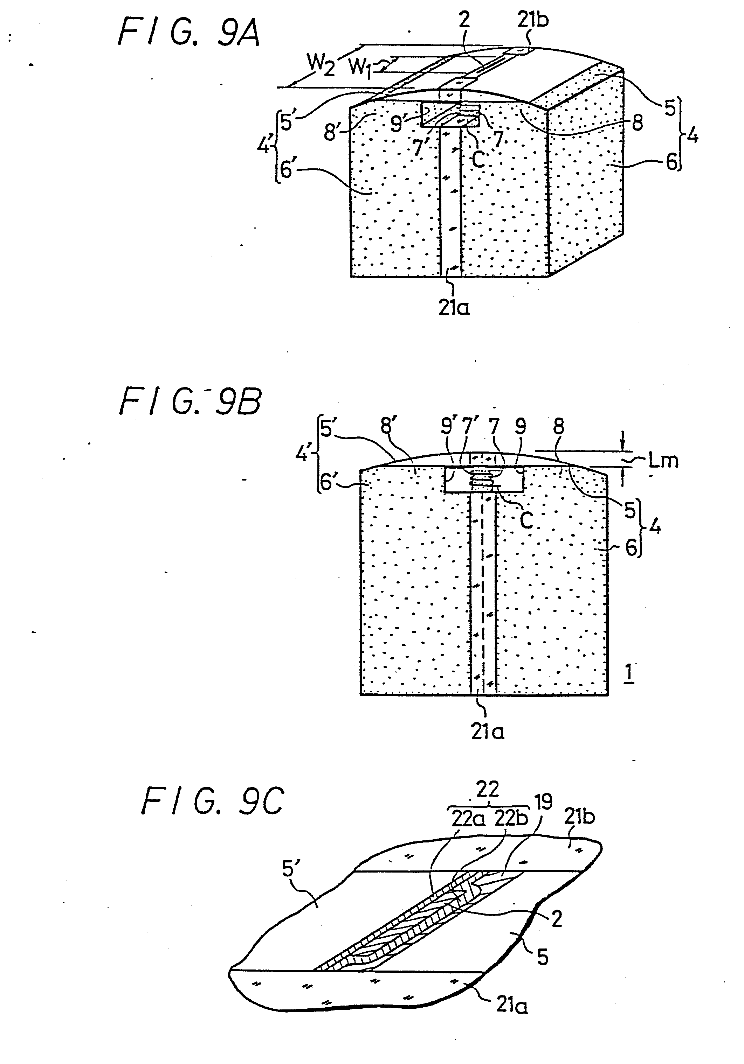

With the magnetic transducer head 1 thus made according to this example, as shown in Fig. 8, the magnetic flux $\phi$ from the main magnetic pole 2 is returned through a magnetic record medium 20 having a magnetic layer 20c reinforced by a high magnetic permeability material layer 20b on a non-magnetic base 20a to the return path magnetic pole portions 8 and 8' separated from the auxiliary magnetic portions 7, 7'.

This magnetic transducer head has the following characteristics.

(1) When the complex block formed of the non-magnetic material and the magnetic material is produced, the bonding surface is flat so that the mirror polishing can be carried out. Moreover, since the manufacturing accuracy is raised easily, the complex block can be formed quite thin. Futhermore, since the bonding is carried out on the surface, the bonding work is easy with the result that no bubble, no concave therein and so on occur in the bonded layer. In addition, the configuration of the grooves which are used as the windows for the coil is simple so that the grooves can be formed with ease at one working process.

(2) According to this example, since a number of complex blocks can be produced by one bonding and then cutting, this example is suitable for the mass production.

(3) According to this example, since the auxiliary magnetic pole member is not formed as the plate shape but the large block shape and also the magnetic pole portions opposite to the coil winding window portions, namely, both the side magnetic pole portions become the return path for the record/reproduce magnetic field $\phi$, the record/reproduce efficiency can be improved greatly.

However, in such magnetic transducer head for perpendicular mode recording having the above characteristics, it is requested to further raise record/reproduce efficiency by lowering the impedance of the coil C.

In view of such aspect, this invention is to provide a magnetic transducer head for perpendicular mode recording capable of raising record/reproduce efficiency by lowering the impedance of the coil C.

DISCLOSURE OF INVENTION

Magnetic transducer head for perpendicular mode recording of the invention comprises a main magnetic pole formed of a thin film made of soft magnetic material and a pair of guard blocks bonded to the main magnetic pole as a unitary body so as to grip the main magnetic pole from both sides thereof, wherein the guard blocks are each formed of a non-magnetic material portion extended from a magnetic record medium contact surface to a predetermined position and a magnetic material portion, grooves are formed on bonded boundary surfaces between the non-magnetic material portions and the magnetic material portions to form auxiliary magnetic
pole portions magnetically connected to the main magnetic pole
to become auxiliary magnetic poles of a predetermined width
along the transport direction of a magnetic record medium,
the widths of the auxiliary magnetic pole portions formed
by the grooves in the track width direction are made smaller
than those of the guard blocks in the track width direction
and a coil is wound around the main magnetic pole through
the grooves.  Thus, the impedance of the coil C is lowered
and hence the magnetic record/reproduce efficiency is raised.

BRIEF DESCRIPTION OF DRAWINGS

Fig. 1 is a schematic view illustrating an example
of a prior art magnetic transducer head for perpendicular
mode recording;

Figs. 2 to 7 are respectively diagrams showing a
manufacturing process of the example shown in Fig. 1;

Fig. 8 is a plan view showing a state in which the
example of the magnetic transducer head for perpendicular
mode recording shown in Fig. 1 is used;

Fig. 9A is a perspective view illustrating an
embodiment of a magnetic transducer head for perpendicular
mode recording according to the present invention;

Fig. 9B is a plan view of Fig. 9A;

Fig. 9C is an enlarged view of a main part of Fig.
9A;

Figs. 10 to 16 are respectively diagrams of a
manufacturing process of the embodiment shown in Fig. 9;

Figs. 17 and 18 are respectively perspective views illustrating an example of a main part of an example of other manufacturing process for producing the embodiment shown in Fig. 9;

Figs. 19 and 23 are respectively diagram showing other embodiments of the present invention;

Figs. 20, 21 and 22 are respectively diagrams showing a main part of an example of a manufacturing process of the embodiment shown in Fig. 19; and

Fig. 24 is a diagram showing a main part of an example of a manufacturing process of the embodiment shown in Fig. 23.

BEST MODE FOR CARRYING OUT THE INVENTION

An embodiment of the magnetic transducer head for perpendicular mode recording according to the present invention will hereinafter be described with reference to Fig. 9. In Fig. 9 and the followings, like parts corresponding to those in Figs. 1 to 8 are marked with the same references and their detailed explanation will be omitted.

In this embodiment, as shown in Fig. 9A, a width $W_1$ of the auxiliary magnetic pole portions 7, 7' in the track width direction is made smaller than width $W_2$ of the guard blocks 4, 4' in the track width direction and is made corresponding to a predetermined track width of a magnetic tape which will contact with the contact surface thereof with a magnetic record medium. Similarly to the example of the previously proposed application, the grooves 9, 9' are respectively cut out as shown in Fig. 9B. 21a, 21b respectively designate glass layers, each of which is charged with a predetermined thickness. Through these glass layers 21a, 21b, the guard blocks 4, 4' are bonded to each other.

22 designates an $SiO_2$ layer having a thickness of 0.3 to 1 µm which is deposited by, for example, sputtering. This $SiO_2$ layer 22 is provided to avoid bad influences exerted by the fact which was confirmed as: if a high-permeability magnetic thin film is directly deposited on a ferrite or the like, diffusion of impurity thereto from the ferrite causes coercive force Hc of the thin film to become large so that magnetic permeability is lowered (this was confirmed by non-magnetic ferrite); and if a magnetic film is directly deposited on a crystalline substrate, magnetic characteristic tends to be deteriorated.

Other portions are made similarly to those of the previously proposed magnetic transducer head for perpendicular mode recording.

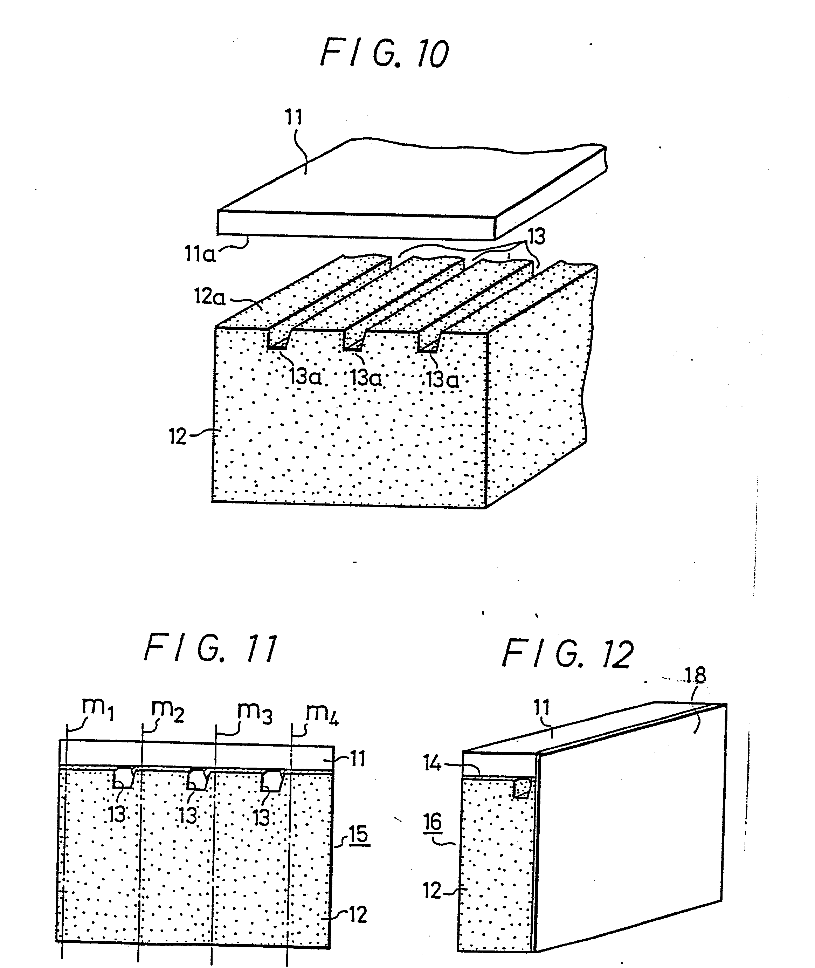

Then, a manufacturing process of one embodiment of this magnetic transducer head for perpendicular mode recording will be described with reference to Figs. 10 to 16. In Figs. 10 to 16, like parts corresponding to those in Figs. 1 to 9 are marked with the same references and their detailed explanation will be omitted.

Fig. 10 corresponds to Figs. 2 and 3 of the example of the previous application and shows a state in which the mirror-polished surface 12a of the magnetic material block 12 and the mirror-polished surface 11a of the non-magnetic plate shape block 11 are opposed to each other so as to be bonded together. In this embodiment, one side surface 13a of a groove 13 which is formed on the mirror-polished surface 12a of the magnetic material block 12 is inclined by using, for example, a diamond grind stone having an inclined side surface with a predetermined angle so as to form an auxiliary magnetic pole which can reduce the cross-section area of the coil C more. And, the cross-section shape of the whole of the groove 13 is selected to be trapezoidal shape.

Subsequently, as shown in Fig. 11, the non-magnetic plate shape block 11 and the magnetic material block 12 are bonded together by melt-bonding by glass and cut away at a predetermined spacing similarly to the example of the previous application.

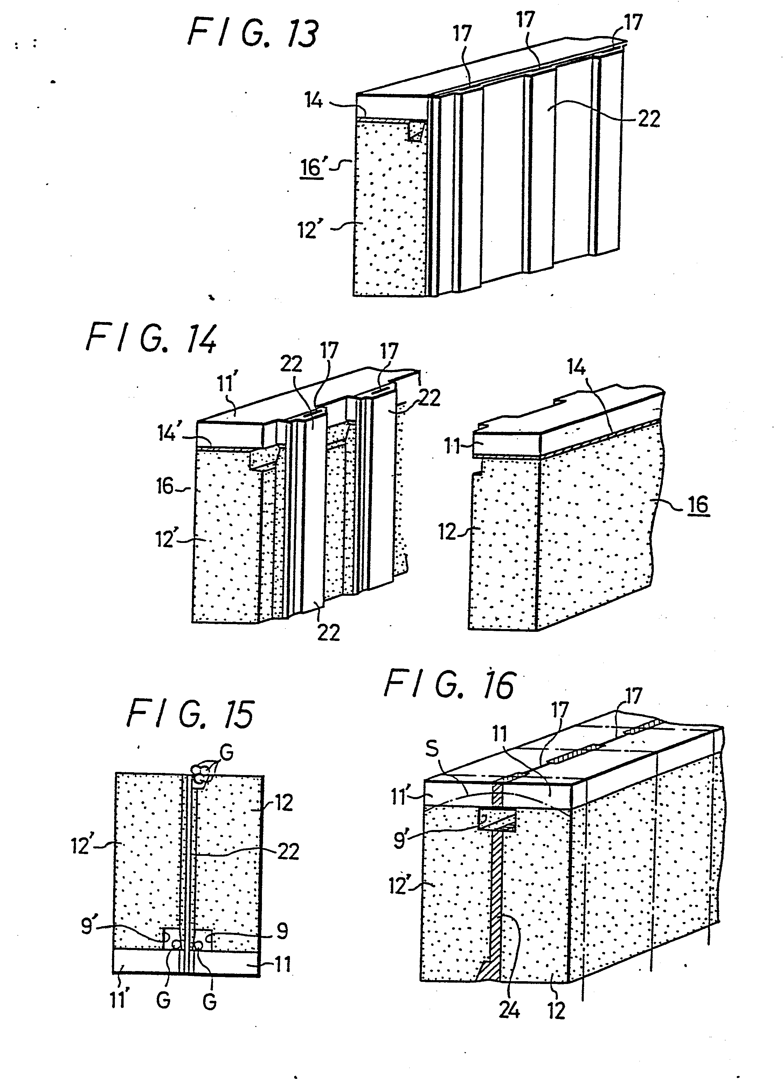

Then, the side surface to which the magnetic thin film 17 constructing the main magnetic pole 2 is to be deposited is mirror-polished and an insulating protection layer 18 having a thickness of 0.3 to 1 µm made of $SiO_2$ or the like is deposited thereon by sputtering as shown in Fig. 12. The $SiO_2$ layer deposited by sputtering generally becomes amorphous and it is generally confirmed that the magnetic thin film which is deposited on an amorphous substrate (for example, a glass plate) can exhibit excellent characteristic. The insulating protection film 22a is not always limited to the $SiO_2$ layer but may be a hard and stable amorphous film. After the insulating pretection film 22a is deposited, as shown in Fig. 13, the magnetic thin film 17 made of, for example, permalloy, sendust alloy, amorphous magnetic alloy or the like which will become the main magnetic pole 2 of the magnetic transducer head for perpendicular mode recording is deposited thereon by sputtering, vacuum deposition, ion plating and the like and then etched away to be a stripe shape of a width equal to the track width on which a protection film 22b such as an $SiO_2$ layer or the like is further deposited to have a thickness of 0.5 to 2 μm. The magnetic thin film 17 may be formed such that its portion near the surface on which the finally obtained magnetic transducer head opposes to the magnetic record medium, namely, only the top end portion of the main magnetic pole film is formed thin, while the portion at the position remote from the medium is formed thick. At this time it is possible that the portion which is made thick is formed by superposing magnatic material having high magnetic permeability rather than the material which forms the top end portion of the main magnetic pole which opposes the magnetic record medium. The main magnetic pole is protected by the protection film 22a which was deposited in the preceding manufacturing process and this protection film 22b. Then, the portion between the magnetic thin film 17 which will become the main magnetic pole 2 and the succeeding magnetic thin film 17 is scraped out up to the portion of the groove 9 which will become the winding window, namely, the thickness of the auxiliary magnetic pole as shown in Fig. 14. Then, as to the complex plate shape member 16'

which will become the other guard block 4' formed by the similar manufacturing processes to those in Figs. 10 and 11, the portion corresponding to the grooved portion of the above complex plate shape member 16 is scraped out by a depth corresponding to the thickness of the auxiliary magnetic pole. As shown in Fig. 15, these complex plate shape members 16, 16' are bonded together by melt-bonding by using a glass rod G with a predetermined positional relation therebetween and then formed as a unitary body. When the main magnetic pole film is made of amorphous magnetic material, it is necessary to use glass having particularly low melting point for preventing the amorphous magnetic material from being crystallized as the glass used for bonding. Further, through the melt-bonding by glass, the grooved portion except the portion of the grooves 9, 9' for the winding is filled with glass.

In this case, it is desired to provide a construction in which a necessary cut-out portion is formed on the side which glass enters so as to introduce therinto glass. Then, the complex member bonded together by the glass layer 24 is cut-out at that portion with a predetermined spacing along chain lines $n_1$, $n_2$, ... as shown in Fig. 16 and bonded on a head mounting base (not shown). Thereafter, the top end surface, namely, the surface side of the non-magnetic plate shape blocks 11, 11' is polished, on which the contact surface S with the magnetic medium is formed. It is desired that the cut-out portion for introducing the glass as shown in Fig. 15 is cut-out and removed. Thus, the main magnetic pole 2 formed of the

- 14 -

magnetic thin film 17 is made to face the magnetic medium
contact surface S, the non-magnetic material portions 5, 5'
are disposed at both sides of the top end portion of this
main magnetic pole 2 and the magnetic material portions 6,
6' are disposed therebehind.  On this magnetic material por-
tions 6, 6', there are formed the auxiliary magnetic pole
portions 7, 7' having the width in the track width direction
which is smaller than the width of the guard blocks 4, 4' in
the track width direction and the main magnetic pole 2 around
which the coil C is wound, thus the magnetic transducer head
for perpendicular mode recording according to this embodiment
being obtained.

According to this embodiment described above, since
the width $W_1$ of the auxiliary magnetic pole portions 7, 7' of
the magnetic transducer head for perpendicular mode recording
in the track width direction is made smaller than the width
of the guard blocks 4, 4' and made corresponding to the predetermined track width of the tape which contacts with the
tape contact surface, the winding cross-section area of the
coil C can be made small as compared with the prior art.
Accordingly, even if the length of the winding is short as
compared with the prior art, it is possible to carry out the
winding with the same number of the windings and hence a
necessary magnetic flux is obtained.  As a result, the
impedance of the coil can be lowered and magnetic record/re-
produce efficiency can be enhanced.  Further, when the winding
of the same inpedance is carried out the number of winding is
increased as compared with that of the example of the previously proposed application so that it is possible to carry out magnetic recording and reproducing with high sensitivity.

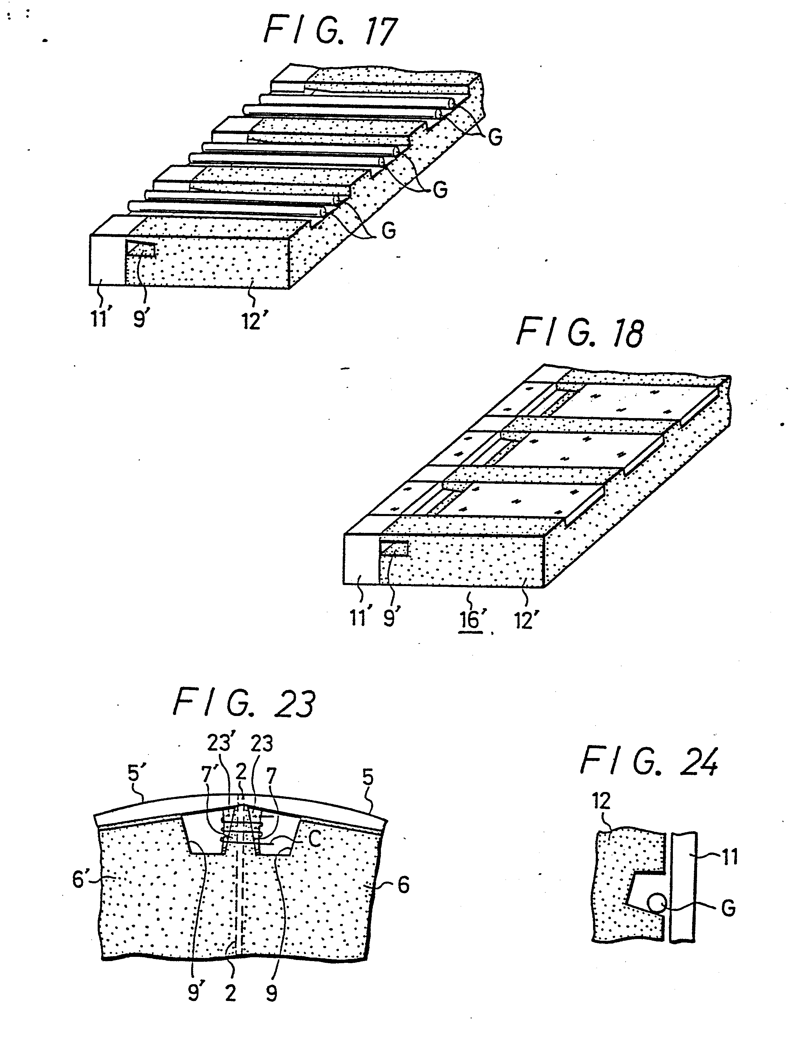

In order to obtain the above example of the magnetic transducer head for perpendicular mode recording, when the complex plate members 16, 16' are bonded to each other by melt-bonding by glass rod G which is heated, the manufacturing process in which the grooved portions are filled with glass at the same time is used. In this case, such a manufacturing process is desired that as shown in Fig. 17, the glass rod G is located in advance in the grooved portion and then heated to charge such grooved portion with glass. In Fig. 17, the glass rod G is laid across the portion of the winding groove 9' and so, upon heating, it seems as if the winding groove 9' were melt-bonded to this glass rod G, too. However, in practice, the depth of the groove 9' is substantially the same as the thickness of the auxiliary magnetic pole 7' and about 100 μm at most, while the depth of the winding groove exceeds several hundreds μm, thus the groove 9' never being filled up with glass. If there is a fear that the groove 9' is filled up with glass, it is sufficient to place the glass rod in the portion except the portion of this groove 9'. Furthermore, upon heating, when the glass is flowed into the groove 9' along the wall surface, carbon powder may be coated on the wall surface so as to decrease the wet property with the glass, whereby to avoid such accident.

When the manufacturing process for filling the glass is used and the complex plate shape member 16' as shown in
Fig. 18 is obtained, the various processes such as forming
the SiO$_2$ layer or the like are provided similar to the
example of the previously proposed application. However,
when such process is carried out, since the groove is not
required to be filled up, the bonding process uses in addition
to the melt-bonding by glass (glass of, for example, thin
film shape is inserted and then heated), organic bonding agent
such as epoxy resin or the like, inorganic bonding agent,
water glass and so on.

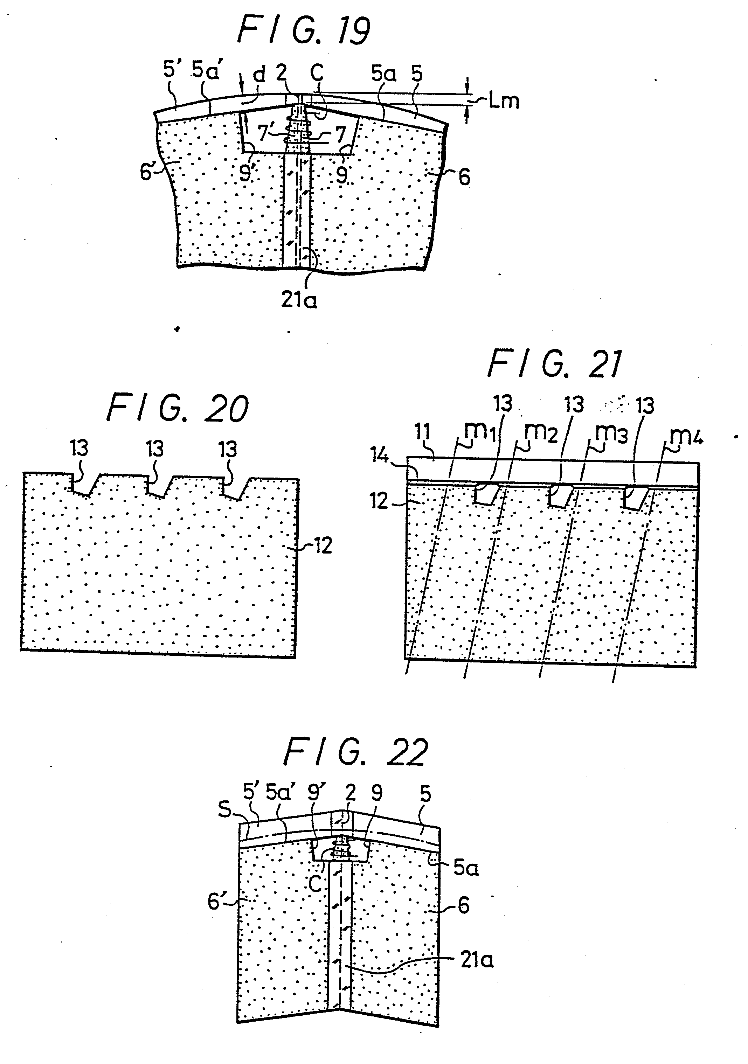

Fig. 19 shows another embodiment of the present
invention. In Fig. 19, like parts corresponding to those in
Fig. 9 are marked with the same references and their detailed
explanation will be omitted. In this embodiment, boundary
surfaces 5a, 5a' between the non-magnetic material portions
5, 5' and the magnetic material portions 6, 6' are retreated
from the plane perpendicular to the main magnetic pole 2
formed at the tip end portion of the auxiliary magnetic poles
to the side remote from the magnetic medium contact surface.
Other portions are formed similarly to those of the above
embodiment.

The different point in the manufacturing process
of this embodiment from that of the preceding embodiment resides
in that a groove 13 is formed to be inclined so as to corre-
pond to the retreated angle of the boundary surfaces 5a, 5a'
as shown in Fig. 20 and that chain lines m$_1$, m$_2$, m$_3$ ··· along
which the magnetic material block 12 is cut-out are inclined with a predetermined angle coreesponding to the retreated
angle of the boundary surfaces.  Other manufacturing processes
are similar to the above embodiment.  As shown in Fig. 19,
after the guard blocks 4, 4' are bonded together, the magnetic
record medium contact surface S is polished to form a cylindrical
surface, thus the magnetic transducer head for perpendicular
mode recording of this embodiment being produced.

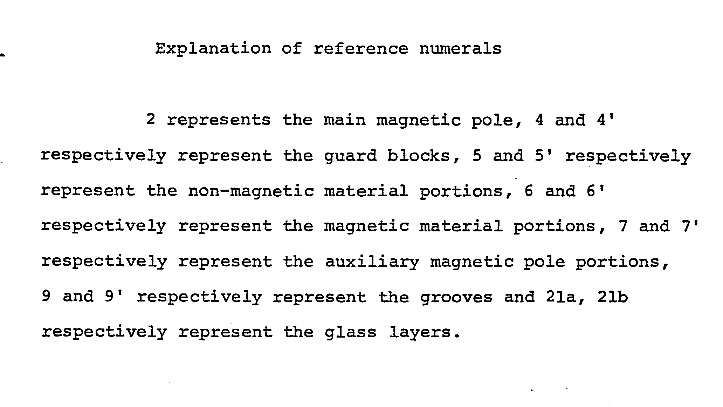

    According to this embodiment, the similar action
and effect to those of the above embodiment can be achieved.
In addition since the boundary surfaces 5a, 5a' are retreated
from the plane perpendicular to the main magnetic pole formed
at the tip end portion of the auxiliary magnetic poles to the
side remote from the magnetic medium contact surface, the
thickness $\underline{d}$ of the non-magnetic material members 5, 5' can
be selected to an extent necessary for strength and the length
Lm of the main magnetic pole 2 can be made shorter, thus the
magnetic transducer head being made as the magnetic transducer
head of high sensitivity.  Furthermore, in this embodiment
shown in Fig. 19, it is desired to take such structure that
glass members 23, 23' are provided at side surfaces of the
auxiliary magnetic pole portions 7, 7' of the magnetic material
poritons 6, 6' for reinforcing the strength of the auxiliary
magnetic poles as shown in Fig. 23.  With this structure, when,
for example, the non-magnetic plate shape block 11 and the
magnetic material block 12 are bonded to each other, it is
desired to locate a glass rod G which is of a size enough to
reach the wall surface of the winding grooves 9, 9', namely,

- 18 -

the side surfaces of the auxiliary magnetic pole portions
7, 7' as shown in Fig. 24.

It is needless to say that this invention is not
limited to the above embodiments but can take various modifications without departing from the main scope of the present
invention.

CLAIMS

1.          A magnetic transducer head for perpendicular mode recording comprising a main magnetic pole formed of a thin film made of soft magnetic material and a pair of guard blocks bonded to said main magnetic pole as a unitary body so as to grip said main magnetic pole from both sides thereof, characterized in that said guard blocks are each formed of a non-magnetic material portion extended from a magnetic record medium contact surface to a predetermined portion and a magnetic material portion, grooves are formed on boundary surfaces between said non-magnetic material portions and said magnetic material portions to form auxiliary magnetic pole portions magnetically connected to said main magnetic pole to become auxiliary magnetic poles of a width along a transport direction of said magnetic record medium, the widths of said auxiliary magnetic pole portions formed by said grooves in a track width direciton are made smaller than those of said guard blocks in the track width direction and a coil is wound around said main magnetic pole through said grooves.

2.          A magnetic transducer head for perpendicular mode recording comprising a main magnetic pole formed of a thin film made of soft magnetic material and a pair of guard blocks bonded to said main magnetic pole as a unitary body so as to grip said main magnetic pole from both sides thereof, in which at least one of said guard blocks is formed of a non-magnetic material portion extended from a magnetic record medium contact surface to a predetermined portion and a magnetic material portion, a groove is formed on a boundary surface between said non-magnetic material portion and said magnetic material potion to form an auxiliary magnetic pole portion magnetically connected to said main magnetic pole to become auxiliary magnetic pole of a width along a transport direction of said magnetic record medium, the widths of said auxiliary magnetic pole portion formed by said groove in a track width direction is made smaller than that of said guard block in the track width direction and a coil is wound around said main magnetic pole through said groove, characterized in that a non-magnetic guard member at least one side of said main magnetic pole in the track width direction is provided to form a magnetic medium contact surface with said guard block members.

3.      A magnetic transducer head for perpendicular mode recording according to claim 1, characterized in that said bonded boundary surfaces between said magnetic material portions of said guard blocks and said non-magnetic material portions are formed to be apart from said magnetic record medium as they come apart from said magnetic main pole.

4.      A magnetic transducer head for perpendicular mode recording according to claim 2, characterized in that said guard blocks are all complex blocks formed of non-magnetic material portion and magnetic material portion.

5.      A magnetic transducer head for perpendicular mode recording according to claim 1, characterized in that said magnetic material portion is made of soft magnetic ferrite.

6.     A magnetic transducer head for perpendicular mode recording according to claim 2, characterized in that said non-magnetic guard member is made of glass.

1

## FIG. 1A

## FIG. 1B

## FIG. 2

11

11a          12a

12

## FIG. 3

13          12a          13

12

## FIG. 4

m₁          m₂          m₃          11

14

13          13          13          15

12

## FIG. 5

11

14

7

13          16

16a

12

3

## FIG. 6

18
11
14
13
16
12
17
16a

## FIG. 7

11'
17
17
14'
11
14
$n_2$
S
13'
13
$n_1$
16
16'
19
12

## FIG. 8

$\phi$    2    $\phi$
7
7'
8'
7
C
8
9'
9
6'
12
6
3
20a
20b
20c
11

4

## F I G. 9A

## F I G. 9B

## F I G. 9C

## FIG. 10

11

11a

13

12a

13a   13a   13a

12

## FIG. 11

$m_1$   $m_2$   $m_3$   $m_4$

11

13   13   13

15

12

## FIG. 12

18

11

14

16

12

6

## F I G. 13

## F I G. 14

## F I G. 15

## F I G. 16

7

## F I G. 17

11'  9'  12'

## F I G. 18

11'  9'  16'  12'

## F I G. 23

5'  7'  23'  23  7  5
2
6'  C  6
9'  2  9

## F I G. 24

12
11
G

8

## F I G. 19

*5' 5a'* d 2 C *5a 5*

7' 7

6' 9' 9 6

Lm

21a

## F I G. 20

13 13 13

12

## F I G. 21

13 13 13

11 m₁ m₂ m₃ m₄

14

12

## F I G. 22

S *5' 5a'* 9' 2 9 5

5a

6' C 6

21a

9

Explanation of reference numerals

2 represents the main magnetic pole, 4 and 4' respectively represent the guard blocks, 5 and 5' respectively represent the non-magnetic material portions, 6 and 6' respectively represent the magnetic material portions, 7 and 7' respectively represent the auxiliary magnetic pole portions, 9 and 9' respectively represent the grooves and 21a, 21b respectively represent the glass layers.

# INTERNATIONAL SEARCH REPORT

0137049

International Application No   PCT/JP84/00064

## I. CLASSIFICATION OF SUBJECT MATTER (if several classification symbols apply, indicate all) [3]

According to International Patent Classification (IPC) or to both National Classification and IPC

Int. Cl[3]   G11B 5/12, 5/20

## II. FIELDS SEARCHED

| Minimum Documentation Searched [4] | |
|---|---|
| Classification System | Classification Symbols |
| IPC | G11B 5/12, 5/20 |

| Documentation Searched other than Minimum Documentation to the Extent that such Documents are Included in the Fields Searched [5] | |
|---|---|
| Kokai Jitsuyo Shinan Koho | 1976 – 1983 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| P | JP, A, 58-153216 (Sony Corp.) 12 September 1983 (12. 09. 83) | 1, 4, 5 |
| X | JP, A, 57-111817 (Toshiba Corp.) 12 July 1982 (12. 07. 82) | 1 |
| X | JP, A, 57-15211 (Toshiba Corp.) 26 January 1982 (26. 01. 82) | 1, 4 |

\* Special categories of cited documents: [15]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search [3] | Date of Mailing of this International Search Report [2] |
|---|---|
| May 8, 1984   (08. 05. 84) | May 14, 1984   (14. 05. 84) |
| International Searching Authority [1] | Signature of Authorized Officer [20] |
| Japanese Patent Office | |

Form PCT/ISA/210 (second sheet) (October 1981)